**Europäisches Patentamt**

(19) **European Patent Office**

**Office européen des brevets**

(11) Veröffentlichungsnummer: **0 051 821 B1**

(12) # EUROPÄISCHE PATENTSCHRIFT

(45) Veröffentlichungstag der Patentschrift:
09.05.84

(51) Int. Cl.³: **C 04 B 41/32**, C 04 B 25/02, B 05 D 5/06

(21) Anmeldenummer: 81109215.4

(22) Anmeldetag: 29.10.81

(54) Verfahren zum Herstellen von dessinierten Formkörpern aus einer härtbaren Masse auf Basis duroplastischer Kunststoffe.

(30) Priorität: 06.11.80 DE 3041794

(43) Veröffentlichungstag der Anmeldung:
19.05.82 Patentblatt 82/20

(45) Bekanntmachung des Hinweises auf die Patenterteilung:
09.05.84 Patentblatt 84/19

(84) Benannte Vertragsstaaten:
AT BE CH DE FR GB IT LI LU NL SE

(56) Entgegenhaltungen:
FR - A - 1 357 110
FR - A - 2 206 426
FR - A - 2 259 070
FR - A - 2 372 028

(73) Patentinhaber: DYNAMIT NOBEL AKTIENGESELLSCHAFT, Postfach 1209, D-5210 Troisdorf, Bez. Köln (DE)

(72) Erfinder: Becker, Josef, Im Grund 2, D-5206 Neunkirchen-Seelscheid 1 (DE)
Erfinder: Simon, Manfred, Dr., Schellenberg 17, D-5216 Niederkassel (DE)
Erfinder: Spiess, Karl-Heinz, Schwellenbach, D-5203 Much (DE)
Erfinder: Weiss, Richard, Dr., Stresemannstrasse 16, D-5210 Troisdorf (DE)

## Beschreibung

Die Erfindung befasst sich mit einem Verfahren zum Herstellen von dessinierten keramikähnlichen Formkörpern, wobei ein Grundkörper aus einer härtbaren Masse auf Basis von duroplastischen Kunststoffen ggf. mit Härtern oder in Kombination mit anorganisch härtenden Systemen, inerten Füllstoffen sowie ggf. Beschleunigern, Farbmitteln und weiteren Hilfsstoffen durch Formpressen hergestellt wird und ggf. mit einer Oberflächenschicht aus einem härtbaren Lackharz versehen wird.

Aus der französischen Patentschrift 21 26 538 sind bereits Fliesen oder Platten für Fussboden- und Wandbeläge bekannt, die aus mit Polyester oder Epoxydharz gebundenen zerkleinertem Steinzeug und Keramikabfällen bestehen. Durch Zusatz von organischen Farbpigmenten können diese Platten auch uni durchgefärbt hergestellt werden.

Aus der DE-A 26 33 711 sind bereits Beschichtungsmassen für dekorative Verbundplatten bekannt, wobei der Rücken mit einer Schicht aus einem inerten Füllstoff, einem nichtthermoplastischen Kleber und einem in Wasser löslichen wärmehärtenden Harz in Form von Harnstofformaldehyd- oder Melaminformaldehydkondensaten beschichtet wird.

Darüber hinaus ist seit langem Kunstharzbeton bekannt, bestehend aus einer Mischung von trockenen Zuschlagstoffen wie Quarzkies, Quarzsand, Quarzmehl und einem Bindemittel auf Basis ungesättigter Polyester, Härter und Beschleuniger ggf. unter Zusatz von Styrol, wobei Mischungen von Zuschlagstoffen zu Bindemittel zwischen 8:1 bis 12:1 üblich sind. Man hat auch bereits versucht, Fassadenplatten ein- oder zweischichtig aus einer Masse auf Basis von ungesättigten Polyesterharzen oder Polymethacrylat und Füllstoffen herzustellen, wozu wir auf die DE-B 21 55 232 verweisen.

Bei allen diesen bekannten Kunstharzsteinen bzw. Kunstharzbeton und hieraus hergestellten Bauteilen sind der Art der Dessinierung durch entsprechendes Einfärben der auszuhärtenden Massen Grenzen gesetzt.

Die bekannte Herstellung von keramischen Formkörpern, wie Platten und Kacheln ist extrem energieintensiv und zeitaufwendig.

Der Energiebedarf beginnt mit dem Trocknen der Tonmineralien, geht weiter über das Trocknen der z.B. stranggepressten Platten zum eigentlichen Brennprozess, und selbst die Dessinierung oder aber auch die abschliessende Glasur benötigen noch extrem hohe Temperaturen über einen längeren Zeitraum.

Die benötigten Temperaturen liegen zwischen 80 bis 100°C, beim Trocknen der Formlinge und bis zu 1200°C, beim Brand. Hierbei sind Verweilzeiten von Stunden bis Tagen erforderlich.

Für diese Brennprozesse werden sehr grosse kostspielige Kammeröfen, Ringöfen oder Tunnelöfen verwendet.

Bisherige Keramikimitationen auf der Basis Kunststoff oder auch kunststoffbeschichteter andersartiger Unterlagen waren meist uni und konnten so vom Dessin und vor allem von den physikalischen Eigenschaftswerten her nicht genügen. Gravierend war dies z.B. bei den Abriebswerten, wodurch diese Produkte z.B. als Bodenplatten nicht eingesetzt werden konnten.

In der FR-A-2 259 070 wird das Herstellen keramikähnlicher Formkörper beschrieben, die aus kunstharzgebundenen mineralischen Stoffen hergestellt sind und mit einer Oberflächenschicht aus einem härtbaren Lack versehen werden, wobei die Grundschichten aus mehreren Schichten von duroplastischen Kunststoffen und Sand als Füllstoff hergestellt werden, wobei jedoch ein relativ hoher Gehalt an Kunststoffen enthalten ist, in dem die mineralischen Füllstoffe bis 86% betragen und der Harzanteil bis 20% beträgt. Die Formmasse wird in der Form zum fertigen Produkt ausgehärtet, das bedeutet einen grossen Bedarf an Formen, da diese erst nach dem Aushärten erst wieder dem Herstellungsprozess zugeführt werden können.

In der FR-A-2 206 426 wird ein Formkörper beschrieben, der zwar relativ geringe Mengen an Harz von 3 bis 10% enthält, jedoch bei relativ hohen Temperaturen bis 240°C ebenfalls in der Form ausgehärtet wird und danach erst entformt wird.

Der vorliegenden Anmeldung liegt die Aufgabe zugrunde, ein preiswertes Verfahren zur Herstellung von Formkörpern, insbesondere Platten auf Basis von härtbaren Kunststoffen mit entsprechenden mineralischen Füllstoffen zu schaffen, wobei insbesondere auch vielfältige Musterungsmöglichkeiten, wie sie aus der Keramikindustrie bekannt sind, möglich sein sollen.

Ausgehend von den bekannten Verfahren zum Herstellen keramikähnlicher Formkörper ist es ein Anliegen der Erfindung, sowohl bezüglich des Materialeinsatzes preiswert und wirtschaftlich zu sein, als auch die Produktionsgeschwindigkeit zu fördern und den Energiebedarf beim Herstellungsprozess klein zu halten. Diese Aufgabenstellung wird durch die Erfindung gelöst mit folgenden Massnahmen:

a) Herstellen einer rieselfähigen Masse aus
2 bis 7, vorzugsweise 4 bis 6 Gew.-% einer härtbaren Kunststoffmischung,
0 bis 3 Gew.-% Ca-stearat, Zinkstearat oder Stearinsäure,
1 bis 5 Gew.-% Lösungsmittel, wie Wasser, Alkohol oder Mischungen hiervon,
96 bis 85, vorzugsweise 96 bis 87 Gew.-% Füllstoffe wie Quarzsand, Kreide, Schwerspat, Korund, Schlacke bzw. Mischungen hiervon, durch homogenes Vermischen und Trocknen auf einen Restfeuchtigkeitsgehalt von 1 bis 3% bei Temperaturen von 50 bis 80°C,
b) Schütten der Masse in eine Form zu einem Grundkörper und Abpressen in der Form mit einem spezifischen Druck von 98 bis 49, vorzugsweise 19,6 bis 39,2 N/mm²
c) Entformen des Grundkörpers aus der Form,

d) ggf. Härten des entformten Grundkörpers bei Temperaturen bis vorzugsweise 150°C,

e) Auftragen einer Dessinierungsschicht auf zumindest einen Teil einer Oberfläche des Grundkörpers aus einem farbmittelhaltigen ggf. härtbaren Lack,

f) Trocknen und ggf. Härten der Dessinierungsschicht sowie ggf. des noch nicht gehärteten Grundkörpers bei Raumtemperatur bzw. erhöhten Temperaturen bis vorzugsweise 150°C,

g) ggf. Aufbringen einer Kunstglasur aus einer härtbaren Harzzusammensetzung und Aushärten der Kunstglasur.

Die wesentlichen Merkmale des erfindungsgemässen Verfahrens sind

1. das Herstellen einer rieselfähigen Masse,
2. der Einsatz geringer Mengen an Kunststoff,
3. Entformen des Fremdkörpers in nicht ausgehärtetem Zustand.

Der Einsatz einer rieselfähigen Masse steht im engen Zusammenhang mit dem geringen Anteil an Kunststoffen, der eingesetzt wird. Eine rieselfähige Masse lässt sich dann jedoch leichter handhaben.

Da erfindungsgemäss nur geringe Mengen an Kunststoff eingesetzt werden, wird vorgeschlagen, zur erleichterten Herstellung einer homogenen Mischung derselben mit dem Kunststoff verträgliche Lösungsmittel wie Wasser, Alkohol, bzw. Mischungen hiervon in gewissen Mengen zuzusetzen. Diese Lösungsmittel werden dann zum Teil zur Herstellung der rieselfähigen Masse wieder abgetrocknet (verdunstet).

Das Entformen des Grundkörpers aus der Form im ungehärteten Zustand hat den Vorteil, dass die Formen nicht miterwärmt werden müssen, während der Aushärtung und auch während dieser Aushärtungszeit bereits wieder für das Formpressen zur Verfügung stehen. Damit wird die Umlaufzeit der Formen verkürzt und eine wesentlich geringere Anzahl von Formen benötigt für eine kontinuierliche Herstellung.

Nach dem erfindungsgemässen Verfahren können keramikähnliche Formkörper auf Basis von Kunststoffen und mineralischer Füllstoffe hergestellt werden, die sowohl von der Möglichkeit der Musterung, Dessinierung als auch von ihren mechanischen Werten, hier insbesondere die Festigkeitswerte, Abriebswerte und Witterungsbeständigkeit weitgehend den Formteilen aus Steinzeugkeramik entsprechen bzw. diese sogar in manchen Eigenschaften übertreffen. Insbesondere ist der Vorteil der nach dem erfindungsgemässen Verfahren hergestellten keramikähnlichen Formkörper in der preiswerteren d.h. energiesparenden Verfahrensweise zu sehen als auch in der einfachen Handhabung der Verfahrensschritte, um zu dem gewünschten Produkt zu gelangen.

Die erfindungsgemäss hergestellten Formkörper weisen durch die angewendeten spezifischen Drucke beim Pressen eine relativ hohe Biegefestigkeit auf, wodurch die Materialdicke geringer sein kann als bei Steinzeugkeramik, so dass neben Materialersparnis zugleich eine Gewichtsersparnis erzielt wird. Werden die Formkörper nach dem erfindungsgemässen Verfahren hingegen in gleicher Materialdicke wie entsprechende Keramikteile hergestellt, so weisen die erfindungsgemäss hergestellten Formkörper eine höhere Festigkeit auf. Dies lässt sich besonders vorteilhaft dann zur Anwendung bringen, wenn Formkörper grösserer Dimensionen hergestellt werden sollen, die grössere Sicherheit bei der Handhabung während der Produktion und bei der späteren Anwendung bieten.

Für die Herstellung der erfindungsgemässen keramikartigen Formkörper sind im Prinzip drei Verfahrensabschnitte vorgesehen, nämlich die Herstellung des Grundkörpers, die Dessinierung bzw. Musterung und die Kunstglasur, d.h. der abriebfeste Überzug. Hierbei können Dessinierung und Überzug identisch sein.

Für den Grundkörper kommen in Frage fast alle duroplastischen Kunststoffe, die extrem hoch mit Quarzsand und anderen mineralischen Füllstoffen und ggf. Pigmenten vermischt werden können. Besonders vorteilhaft lassen sich als härtbare duroplastische Kunststoffe Polyacrylate, Polyurethane, ungesättigte Polyesterharze, Polymethacrylate und Epoxidharze unter entsprechendem Zusatz von Härtern und Beschleunigern und ggf. weiteren Hilfsstoffen einsetzen. Die vorgenannten duroplastischen Kunststoffe haben den Vorteil, dass sie sich mit beliebigen Füllstoffen extrem hoch füllen lassen und dabei eine problemlose Verarbeitung zulassen, insbesondere ist das Herstellen der Grundkörper in offenen Formen durch Einfüllen der Masse, Verdichten und ggf. Abpressen möglich sowie das Aushärten bei relativ niedrigen Temperaturen, d.h. geringem Energiebedarf und sogar bei Raumtemperatur.

Eine weitere Gruppe duroplastischer härtbarer Kunststoffe, die für die Herstellung des Grundkörpers in Frage kommen, sind Kondensationsharze wie Melaminharze, Harnstoffformaldehydharze, Phenolformaldehydharze bzw. Mischungen hiervon. Auch diese Kondensationsharze lassen sich hoch mit Füllstoffen anreichern. Es lassen sich auch u.a. die angeführten Harze mit anorganischen Bindern kombinieren.

Die härtbare duroplastische Kunststoffmischung, die als organisches Bindemittel für den Grundkörper eingesetzt wird, hat je nach eingesetztem Kunststoff eine andere Zusammensetzung.

Bei Verwendung von ungesättigten Polyesterharzen werden bevorzugt

96 bis 98 Gew.-% ungesättigtes Polyersterharz und

3 bis 1 Gew.-% Katalysator (Härter) und

2 bis 1 Gew.-% Beschleuniger und

ggf. weitere Hilfsstoffe wie Benetzungsmittel, Stabilisatoren, Farbmittel eingesetzt.

Bei Einsatz von Polyacrylaten bzw. Polymethacrylaten besteht die härtbare Mischung aus

90 bis 95 Gew.-% Acrylaten,
10 bis 5 Gew.-% Härter (Peroxide), sowie

ggf. ebenfalls weiteren Hilfsstoffen bzw. ohne Härter bei Härtung mittels Elektronenstrahlen einer Dosis von 2 bis 8 Mrad.

Bei Einsatz von Polyurethanen kann die härtbare Mischung bestehen aus

30 bis 80 Gew.-% Polyäther bzw. Polyolen,
70 bis 20 Gew.-% Isocyanaten.

Bei Einsatz von Epoxydharzen kann eine härtbare Mischung aus

50 bis 90 Gew.-% Epoxidharz,
50 bis 10 Gew.-% Amine, Polyamine bzw. Polyamidoamine,
eingesetzt werden.

Bei Einsatz von Kondensationsharzen für härtbare Mischungen werden bevorzugt folgende Zusammensetzungen gewählt:

96 bis 100 Gew.-% Kondensationsharze, wie Melaminharz, Phenolformaldehydharze und
0 bis 4 Gew.-% Härter, wie Ammonchlorid, Salzsäure.

Für alle angegebenen härtbaren Kunststoffzusammensetzungen gilt, dass die angegebenen Gew.-% sich auf bestimmte Harze und Härtertypen bevorzugt beziehen und je nach Harz und Härterkombination sich andere optimale Gewichtsverhältnisse ergeben.

Als mineralische Füllstoffe werden bevorzugt Quarzsande, Kreide, Schwerspat, Korund, Schlacke, Basalt, Aluminiumhydroxid und Mischungen hiervon eingesetzt. Es ist jedoch auch denkbar, weitere trockene Füllstoffe wie Marmorgranulat, Perlit, Blähton, und ggf. auch zerkleinerte Schaumstoffreste wie Acrylatschaum, Polyäthylenschaum, Polyvinylchloridschaum, Polyurethanschaum, Phenolharzschaum, Polyesterschaum usw. als Füllstoff zuzusetzen. Bevorzugt hat der Füllstoff eine mehlige bis feinkörnige Beschaffenheit mit einer Korngrösse von 0 bis 0,5 mm.

Aus wirtschaftlichen Überlegungen soll der Anteil an duroplastischem härtbarem Kunststoff im Grundkörper so gering wie möglich sein, wobei jedoch eine untere Grenze bei etwa 3 Gew.-% härtbare Harzmischung bezogen auf den Füllstoff liegt. Mit dem erfindungsgemässen Verfahren können Grundkörper mit ausreichender Festigkeit beispielsweise für das Anwendungsgebiet als Wandkachel oder Bodenplatte mit Dicken ab 2 mm hergestellt werden. Für die vorgesehenen Anwendungsgebiete sind Dicken der erfindungsgemässen Formkörper von 30 mm als obere Grenze in der Regel anzusehen.

Ein wesentliches Verfahrensmerkmal der Erfindung ist darin zu sehen, dass rieselfähige, d.h. schüttfähige Mischungen hergestellt werden, die ein leichtes genaues Befüllen der Formen ermöglichen. Des weiteren haben die erfindungsgemäss vorgeschlagenen Massen die Eigenschaft, nach dem Verpressen bereits ohne Aushärtung soviel Eigenfestigkeit dem Grundkörper zu verleihen, dass er – ohne Aushärtung – entformt werden kann. Damit ist ein wirtschaftlicher Fertigungsprozess möglich – während die Formen erneut gefüllt werden, beginnt im übrigen der Dessinierungsprozess.

Eine besonders vorteilhafte erfindungsgemässe Masse auf Basis von Kondensationsharzen besteht aus

2 bis 4 Gew.-% einer härtbaren Kunststoffmischung auf Basis von Kondensationsharz,
1 bis 2 Gew.-% Ca-stearat, Zinkstearat oder Stearinsäure,
1 bis 5 Gew.-% Wasser, Alkohol oder Mischungen hiervon
96 bis 89 Gew.-% Füllstoff mit einer Korngrösse unter 0,5 mm

die durch Mischen, Trocknen auf einen Restfeuchtigkeitsgehalt von 1 bis 3%, vorzugsweise 1,5 bis 2% bei Temperaturen etwa zwischen 50 bis 80°C und Sieben mit einer Maschenweite unter 0,8 mm hergestellt wird.

Um mit dem erfindungsgemässen Verfahren keramikähnliche Formkörper in beliebigen wiederholbaren Musterungen herstellen zu können, ist die Möglichkeit der Dessinierung des Grundkörpers und die anzuwendenden Dessinierungsverfahren sowie die einzusetzenden Farbmittel bzw. Farblacke von besonderer Bedeutung. Obgleich es möglich ist, bereits den Grundkörper durch entsprechende Pigmentierung durchgehend oder ggf. marmoriert einzufärben, liegt der wesentliche Dessinierungsschritt im Aufbringen einer farbmittelhaltigen Dessinierung auf zumindest einem Teil der Oberfläche des Grundkörpers und zwar entweder auf den bereits gehärteten oder auf den noch nicht gehärteten Grundkörper. Für das Aufbringen der Dessinierungsschicht können bekannte Verfahren, insbesondere das Spritzen, Drucken, Siebdrucken, Tropfen, Giessen, Tauchen und auch Kombinationen dieser Verfahren und ein- oder mehrfache Aufträge angewendet werden. Beispielsweise kann in einem ersten Verfahrensschritt im Siebdruckverfahren ein Farbfilm aufgebracht werden und hierauf nach dessen Trocknung eine zweite Lackfarbe punktuell aufgespritzt werden, die durch Inselung eine entsprechende Musterung bewirkt. Es ist auch möglich, Farblacke zu wählen, die in der Pigmentierung und Viskosität so eingestellt sind, dass Farbpigmente nach dem Auftragen der Lackschicht auf den Grundkörper ausschwimmen und auf diese Weise eine entsprechende Farbvariierung ergeben. Auch Mischeffekte mit mehreren Farblacken und Stotterspritzen etc. sind anwendbar, um entsprechende Dessins zu erzielen.

Im Prinzip sind zum Herstellen der Dessinierungsschicht auf dem Grundkörper alle bekannten Lacke einsetzbar, wobei zur Pigmentierung sowohl anorganische als auch organische Farbmittel Verwendung finden können. Vorteilhaft ist, dass für das erfindungsgemässe Verfahren keinerlei Ansprüche im Hinblick auf Hochtemperaturbeständigkeit der Farbmittel gestellt werden, im Gegensatz zur Farbgebung und Dessinierung von keramischen Formkörpern, bei denen die Pigmente den nachfolgenden Brennvorgängen Stand halten bzw. angepasst sein müssen. Es können daher schlicht Farbmittel für das erfindungsgemässe Verfahren mit geringer Temperaturfestigkeit bis zu 200°C eingesetzt werden.

Für die Farblacke sind 100%ige, also lösungsmittelfreie Lacke einsetzbar ebenso wie Lacke, die nur einen Festkörpergehalt von 5% aufweisen und im übrigen Lösungsmittel enthalten. Die einzustellenden Viskositäten der Lacke richten sich hierbei ganz nach dem gewünschten Effekt und den Erfordernissen des Auftragsverfahrens. Übliche Viskositäten des Lackes liegen zwischen 14 und 180 Sekunden Auslaufzeit aus dem DIN-Becher mit einer 4 mm Düse. Für das erfindungsgemässe Verfahren werden Nassauftragsgewichte der Farblacke je nach Dessinierung zwischen 5 g/m² und 200 g/m² bevorzugt vorgesehen.

Die Farblacke können in ihrer Zusammensetzung so aufgebaut sein, dass sie physikalisch trocknen, chemisch- oder auch strahlenhärtbar sind. Als Bindemittelsysteme für die Lacke können beispielsweise Verwendung finden: Polyvinylalkohol, Polymethylmethacrylat, Polyvinylchlorid, ungesättigte Polyester, Expoxidharze, Acrylate, Harnstoff, Melamin, Alkydharze u.a.

Geeignete Farbmittel sind sowohl anorganische als auch organische Pigmente und lösbare organische Farbstoffe.

Als Lösungsmittel für die Farblacke kommen ggf. in Frage: Wasser, Alkohole, Ester, Ketone, Aromaten, Chlorkohlenwasserstoffe, Glykole u.a.

Ein weiteres erfindungswesentliches Merkmal zum Herstellen keramikähnlicher Formkörper auf Basis härtbarer Kunststoffe, hochgefüllt mit mineralischen Füllstoffen, ist die Herstellung einer Kunstglasur, d.h. entsprechend der bei Keramik vorhandenen Glasur. Die erfindungsgemässe Kunstglasur hat die Aufgabe, eine ausreichende Härte und Kratzfestigkeit, Chemikalienbeständigkeit und ggf. Witterungsbeständigkeit zu erbringen und eine rationelle Fertigung zu ermöglichen. Der Glanzgrad der Kunstglasur ist von hochglänzend bis matt variierbar, wobei die Kunstglasur auch strukturiert sein kann.

Bei dem bekannten Verfahren zum Herstellen von Kunstharzen mit einem Lacküberzug wird dieser Lacküberzug zuerst in die Form gebracht und danach der Kunststein bzw. Kunstbeton in die Form gegossen. Das erfindungsgemässe Verfahren unter Dessinierung der Oberflächen der herzustellenden Formkörper geht hiervon einen völlig anderen Weg. Für die Kunstglasur des erfindungsgemässen Verfahrens finden insbesondere härtbare Harzzusammensetzungen auf Basis von Acrylaten, Methacrylaten, Polyurethanen, Polydiol/en-Systemen bzw. Organopolysiloxanen und ggf. Mischungen Verwendung. Je nach Art der Kunstglasur kann diese lösungsmittelhaltig oder auch lösungsmittelfrei sein, wobei sich dies auch nach der Auftragsmenge und der Art des Aufbringens der Kunstglasur auf die dessinierten Grundkörper richtet. Für das Aufbringen der Kunstglasur bieten sich insbesondere das Giessen, Tauchen, Drucken, Walzen und Spritzen an, wobei Auftragsgewichte der Kunstglasur zwischen 20 bis 150 g/m² bevorzugt werden. Bevorzugt werden für die Kunstglasur strahlenhärtende Harzzusammensetzungen wegen der relativ kurzen Härtungszeit. Hierbei können sowohl mittels UV-Strahlen als auch mittels Elektronenstrahlen härtbare Systeme eingesetzt werden.

Beispielsweise können mittels UV-Strahlen härtbare Überzüge, auch mit Mattierungseffekt, wie sie in der DE-A 30 06 960 ausführlich beschrieben sind, für das erfindungsgemässe Verfahren zum Herstellen keramikähnlicher Formkörper verwendet werden.

Kunstglasurüberzüge auf Basis von Acrylharzen können folgende Zusammensetzung aufweisen:

10 bis 60 Gew.-% Acrylate, Methacrylate, modifizierte Acrylharze
90 bis 10 Gew.-% Lösungsmittel, wie Toluol, Methylisobutylketon
0 bis 30 Gew.-% Härter, wie Isocyanate, Peroxide.

Für Kunstglasurüberzüge auf Basis von modifizierten Acrylaten können Zusammensetzungen aus z.B.

100 Gew.-Teile Epoxyacrylat,
200 Gew.-Teile tetraoxäthyliertes Trimethylolpropantriacrylat
100 Gew.-Teile Hexandioldiacrylat
10 Gew.-Teile Dimethylketal
o.dgl. eingesetzt werden.

Eine vorteilhafte Variante des Herstellens von keramikähnlichen Formkörpern, beispielsweise für Wand- oder Bodenplatten weisen die kennzeichnenden Merkmale gem. Patentanspruch 12 auf. Hierbei wird aus einer rieselfähigen Masse, beispielsweise nach Patentanspruch 8 ein Grundkörper hergestellt und verdichtet und anschliessend bei relativ niedrigen Temperaturen gehärtet. Die Härtungszeit liegt zwischen 2 bis zu 180 Min. und richtet sich auch nach der Dicke des Grundkörpers. Es ist möglich die Härtung in zwei Stufen, bei zuerst niedriger, ca. 80°C Temperatur, danach bei höherer Temperatur, z.B. 140°C durchzuführen. Von Vorteil ist, dass wegen der niedrigen Härtungstemperaturen nur geringe Energiemengen verbraucht werden und darüber hinaus keine hohen Ansprüche an die Temperaturfestigkeiten der eingesetzen Materialien für den Grundkörper gestellt werden.

Danach kann dessiniert werden, wobei die aufgetragene Lackschicht anschliessend ebenfalls bei relativ niedrigen Temperaturen getrocknet und gehärtet wird, wobei sich die Härtung nach dem verwendeten Farblacksystem richtet, bevorzugt werden lufttrocknende Farblacksysteme. Abschliessend kann die Kunstglasur aus einer härtenden Harzzusammensetzung aufgebracht werden, wobei bevorzugt strahlenhärtbare Harzzusammensetzungen auf Basis von Acrylaten oder modifizierten Acrylaten eingesetzt werden, die insbesondere mittels UV-Strahlen oder auch mittels Elektronenstrahlen gehärtet werden können in relativ kurzer Zeit. Die so hergestellten Formkörper mit Dessinierung und Glasur weisen hohe Abriebfestigkeit, hohe Festigkeit und aufgrund der Harzanteile eine gewisse Biegefestigkeit auf, die sie beispielsweise gegenüber normalen Keramikteilen bevorteilen. Es ist auch möglich, verschieden eingefärbte rieselfähige Massen einzusetzen und nacheinander oder gleichzeitig mittels Schablone einen bereits dessinierten Grundkörper herzustellen, siehe Patentanspruch 13. Auf diesen Grundkörper muss dann nur noch eine Kunstglasur aufgebracht werden, wobei Grundkörper und Kunstglasur ggf. gleichzeitig ausgehärtet werden.

Der Zusatz von geringen Mengen von Calciumstearat, Zinkstearat oder Stearinsäure zu der für den Grundkörper zu verarbeitenden Masse bewirkt überraschenderweise ein Versiegeln der Poren des verpressten und ggf. ausgehärteten Grundkörpers, so dass bei der nachfolgenden Dessinierung bzw. Aufbringen einer Kunstglasur weniger Lack bzw. Harz benötigt wird, da dieses nicht mehr so tief in den Grundkörper eindringt.

Das erfindungsgemässe Verfahren arbeitet mit sehr geringen Anteilen von härtbarem duroplastischem Kunststoff im Grundkörper, wodurch sich ein sehr preiswertes Produkt ergibt, und das zudem die Möglichkeit bietet, den Grundkörper vor dem Aushärten kalt zu entformen und ohne Form auszuhärten. Damit können die für die Herstellung der Grundkörper benötigten Formen sehr schnell dem Produktionsprozess wieder zugeführt werden und sind nicht auch während der relativ langen Verweilzeit zum Aushärten der Grundkörper dem Produktionsprozess entzogen. Mit dem erfindungsgemässen Verfahren und der für den Grundkörper gewählten Materialzusammensetzung ist es dennoch möglich, den noch nicht ausgehärteten Grundkörper zu entformen, wobei er bereits die notwendige Steifigkeit und Festigkeit aufweist, um ein Zerbröckeln zu verhindern. Im Durchschnitt werden für ausgehärtete Grundkörper ohne Lackschicht bzw. Kunstglasur bereits bei einer Plattendicke von 6 mm Biegefestigkeiten von 35 N/mm² und mehr erreicht. Bei dickeren Platten ist die Biegefestigkeit entsprechend höher.

Das Verfahren kann auch in der Weise abgewandelt werden, dass die Dessinierung nicht nach dem Aushärten des Grundkörpers sondern vor seiner Aushärtung vorgenommen werden kann. In jedem Fall kann der Farblack, je nach gewählter Zusammensetzung in den noch porösen Grundkörper eindringen, so dass nicht nur oberflächliche Farbaufträge erzielt werden. Bei den noch nicht ausgehärteten Grundkörpern ergibt sich darüber hinaus je nach Zusammensetzung des Farblackes und der gewählten Farben, dass zusätzlich zu dem mechanischen Eindringen des Farblackes in die Poren des Grundkörpers auch ein Migrieren der Farbmittel aus dem Farblack in den Grundkörper bzw. dessen Kunststoffbestandteile stattfindet und damit eine weitere Durchfärbung desselben erfolgt. Dieses Verfahren ist im Patentanspruch 12 beschrieben. Wesentlich für die vorgenannten Verfahren unter Anwendung des Kaltentformens der noch nicht ausgehärteten Grundkörper aus den Formen ist das Pressen derselben mit bestimmtem spezifischem Druck. Für das Pressen können beispielsweise Pressstempel verwendet werden, die ggf. auf ihrer Oberfläche strukturiert sind und auf diese Weise können auch in einer Oberfläche des Grundkörpers beim Verpressen in der Form Strukturen erzeugt werden. Auf diese Weise ist es beispielsweise möglich, schieferartige Strukturen oder auch andere Strukturen auf den Formkörpern, z.B. Platten, herzustellen.

Mit dem erfindungsgemässen Verfahren können besonders vorteilhaft keramikähnliche Formkörper wie Platten für Boden-, Wand- und Deckenbeläge, Geschirr wie Töpfe, Teller und Vasen, Blumenkästen, Fensterbänke, Fassadenplatten, Tischplatten, Badewannen, Waschbecken, Dachziegel o.dgl. hergestellt werden.

Mit dem erfindungsgemässen Verfahren können u.a. Platten für Boden- und Wandbeläge an Stelle von Keramikkacheln hergestellt werden. Die Platten können Abmessungen von $20 \times 20$ bis $100 \times 100$ cm und beliebige Gestalt wie quadratisch, rechteckig, dreieckig, sechseckig, oval oder andere bekannte Formen aufweisen.

Für die Farbgebung der Masse für den Grundkörper kommen insbesondere anorganische, Metalloxid-Pigmente wie Titandioxid, Eisenoxid, Chromoxide sowie Russ und auch organische Farbmittel zum Einsatz.

In der beigefügten Zeichnung ist schematisch der Aufbau eines Formkörpers gem. der Erfindung im Querschnitt dargestellt.

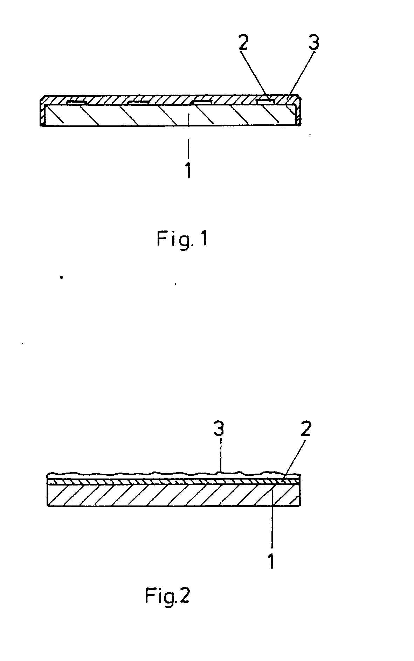

Der plattenförmige Grundkörper 1 nach Fig. 1 ist auf einer seiner Oberflächen partiell mit der Dessinierungsschicht 2, beispielsweise einem Farblack versehen, und abschliessend mit der Kunstglasur 3 überzogen.

Bei dem Ausführungsbeispiel nach Fig. 2 ist der plattenförmige Grundkörper 1 auf einer seiner Oberflächen durchgehend mit der Farblackschicht 2 dessiniert und hierüber die Kunstglasur 2 aufgebracht, die oberflächig profiliert ist.

Nachfolgend werden Beispiele zur Durchführung des erfindungsgemässen Verfahrens gegeben:

Beispiel 1

Das Herstellen einer Platte mit Schieferstruktur als Boden-, Wand-, Fassadenplatte. In einem Henschelmischer werden die nachfolgenden Rezepturbestandteile zu einer homogenen rieselfähigen Masse gemischt und in eine Form gefüllt, dann gepresst, wobei auf einer Oberfläche des hergestellten plattenförmigen Grundkörpers eine Schieferstruktur abgebildet wird:

337 Gew.-Teile Basaltmehl
300 Gew.-Teile Quarzsand 0,3 bis 0,7 mm Ø
300 Gew.-Teile gemahlene Kraftwerksschlacke
53 Gew.-Teile ungesättigtes Polyesterharz,
Leguval® N 50 von Bayer AG
0,5 Gew.-Teile Cobalt-octoat-Beschleuniger
(1%ig in Styrol)
1,0 Gew.-Teile Methyläthylketonperoxid

Der spezifische Druck während des Pressens des Grundkörpers beträgt 34,3 N/mm². Der Grundkörper wird nach dem Pressen entformt und dann in einen Wärmekanal mit 80°C Temperatur gebracht und während 45 Minuten hier ausgehärtet. Der ausgehärtete Grundkörper wird nunmehr dessiniert und mit einer Kunstglasur versehen, beispielsweise beidseitig bespritzt und nach dem Trocknen und Aushärten der Kunstglasur verpackt. Für das Beispiel wird folgende Zusammensetzung für die Kunstglasur gewählt:

30 Gew.-Teile Polymethylmethacrylat,
Degalan® LP 64/12 von Degussa
3,5 Gew.-Teile Zitronensäure
0,2 Gew.-Teile Silikon-Öl
25 Gew.-Teile Methyläthylketon
25 Gew.-Teile Toluol
15,3 Gew.-Teile Xylol
2,0 Gew.-Teile Aerosil® als Mattierungsmittel

Beispiel 2
Es werden
5 Gew.-Teile Phenolformaldehydharz
(Feststoffanteil)
35 Gew.-Teile Quarzsand Type F 31
(Korngrösse 0,08–0,5 mm) der Quarzwerke Frechen
60 Gew.-Teile Quarzmehl W 8
(Korngrösse 0–0,1 mm) der Quarzwerke Frechen
1 Gew.-Teil Calziumstearat
3 Gew.-Teile Wasser-Alkohol 1:1
(Äthanol, Isopronanol)

gemischt und während einigen Minuten auf einen Feuchtigkeitsgehalt von ca. 2% bei 50 bis 80°C getrocknet, gesiebt mit Maschenweite 0,6 mm und als rieselfähige Masse erhalten. Diese wird in Formen von 50 × 50 cm abgefüllt und mit einem spez. Druck von 39,2 N/mm² zu 6 mm dicken Platten verpresst, danach kalt entformt und in zwei Stufen bei 80°C und 140°C je 1 Stunde ausgehärtet. Die erhaltene Platte hatte bereits eine Biegefestigkeit von 40 N/mm². Nach der Entformung werden auf die Platte im Walzengiessverfahren folgende Farblacke aufgegossen und mittels einer 250 KV Elektronenstrahlanlage bei 2,5 Mrad ausgehärtet:

100 Gew.-Teile Epoxiacrylat
150 Gew.-Teile Trimethylolpropantriacrylat
150 Gew.-Teile Hexandioldiacrylat
16 Gew.-Teile Titandioxid

Die erhaltene Platte weist eine sehr glatte hochglänzende weisse Oberfläche auf.

Es ist auch möglich, auf die entformte ausgehärtete Platte mittels Siebdruck ein Dekor aufzubringen, wobei der die Farbmittel enthaltende Lack zugleich die Kunstglasur bildet, bei Raumtemperatur aushärtet und die folgende Zusammensetzung aufweist:

30 Gew.-Teile Polymethylmethacrylat
3,5 Gew.-Teile Zitronensäureester
0,2 Gew.-Teile Silikon-Öl
25 Gew.-Teile Methyläthylketon
25 Gew.-Teile Toluol
15,3 Gew.-Teile Xylol
2,0 Gew.-Teile Aerosil®
5,0 Gew.-Teile Farbpigmente u. Farbstoffe:
Eisenoxid rot und Anthrachinon blau

Beispiel 3
Die nachfolgenden Materialien werden homogen vermischt, gesiebt und in einer ölhydraulischen Presse bei Raumtemperatur zu 200 × 300 mm grossen Platten einer Dicke von 7 mm gepresst.

60 Gew.-Teile ungesättigtes Polyesterharz
Leguval® W 41 von Bayer
1,2 Gew.-Teile Methyläthylketonperoxid
1,1 Gew.-Teile Cobaltoctoat-Beschleuniger
(1% in Styrol)
500 Gew.-Teile Quarzmehl W 10
Quarzwerke Frechen
440 Gew.-Teile Quarzsand H 32
Quarzwerke Frechen

Der spezifische Druck beim Pressen beträgt 3500 N/cm². Die Platten werden entformt und bei 80°C ausgehärtet.

Der so erhaltene plattenförmige Grundkörper wird mit einer Rundläuferanlage mehrfarbig im Wolkenmuster dessiniert und anschliessend getrocknet bei 80°C. Hierbei wird ein Farblack enthaltend

3 Gew.-% Acrylharz
7 Gew.-% PVC-PVA-Copolymeres
5 Gew.-% Farbpigment
85 Gew.-% Lösungsmittel, wie Äthylglykolacetat oder Toluol oder MIBK.
eingesetzt.

Für die Kunstglasur wird eine härtbare Harzmischung aus:

100 Gew.-Teile Urethanacrylat
100 Gew.-Teile tetraoxäthyliertes Trimethylolpropantriacrylat
100 Gew.-Teile Trimethylolpropantriacrylat
90 Gew.-Teile Hexandioldiacrylat

im Giessverfahren auf den Grundkörper aufgetragen und mittels einer 250 kV-Elektronenstrahlanlage mit einer Dosis von 2 Mrad gehärtet.

Beispiel 4

Nach intensivem Mischen lassen sich mit den folgenden Rezepturbestandteilen Platten analog Beispiel 3 pressen.

34 Gew.-Teile Melaminharz
Madurit® VMW 3818 Fa. Hoechst
26,5 Gew.-Teile Melaminharz
Madurit® MF 900 Fa. Hoechst
475 Gew.-Teile Quarzsand F 31
475 Gew.-Teile Calcilit® 100

Die entformten Platten, deren Festigkeit eine Manipulation zulässt, werden zuerst 1 Stunde bei 80°C getrocknet und anschliessend bei 140°C 1 Stunde ausgehärtet. Nach diesem Prozess erreicht man bei einer 7 mm dicken Platte eine Biegefestigkeit von 50 N/mm². Danach wird der so hergestellte ausgehärtete plattenförmige Grundkörper mittels Siebdruck mit Siebdruckfarben der Firma Marabu (Maragloss® GO) dessiniert.

Auf die so erhaltenen dessinierten Platten wird im Walzengiessverfahren eine Kunstglasur folgender Zusammensetzung aufgegossen und mittels 2 UV-Lampen einer Leistung von 80 W/cm bei einer Geschwindigkeit von 4 m/Min. gehärtet:

100 Gew.-Teile Urethanacrylat
100 Gew.-Teile tetraoxäthyliertes Trimethylolpropantriacrylat
100 Gew.-Teile Trimethylolpropantriacrylat
90 Gew.-Teile Hexandioldiacrylat
20 Gew.-Teile Photoinitiator (Darucure® 1173).

Beispiel 5

Eine wie folgt zusammengesetzte Masse aus

33,4 Gew.-Teile Melaminharz Madurit®
VMW 3818, Fa. Hoechst
35,8 Gew.-Teile Phenolharz T 777,
Dynamit Nobel AG
520 Gew.-Teile Quarzsand F 32,
Quarzwerke Frechen
430 Gew.-Teile Quarzmehl W 8,
Quarzwerke Frechen
10 Gew.-Teile Zn-Stearat
30 Gew.-Teile H₂O/C₂H₅OH (1:1)

wird homogen vermischt, dann auf einen Feuchtigkeitsgehalt von 2% getrocknet, gesiebt und in einer Spindelpresse mit einem spezifischen Druck von 4000 N/cm² zu 5 mm dicken und 300 × 300 mm grossen Platten verpresst. Pro Minute lassen sich 20 Platten pressen und ausstossen. Die Platten werden in einem Wärmekanal bei 80 bis 100°C getrocknet und bei 140°C ausgehärtet. Die Durchlaufzeit durch den Kanal beträgt 2 Stunden, wobei die Temperaturstufen jeweils die halbe Verweilzeit einnehmen. Eine Dessinierung dieses Grundkörpers kann analog zu Beispiel 4 vorgenommen werden.

**Patentansprüche**

1. Verfahren zum Herstellen von dessinierten keramikähnlichen Formkörpern, wobei ein Grundkörper aus einer härtbaren Masse auf Basis von duroplastischen Kunststoffen ggf. mit Härtern oder in Kombination mit anorganisch härtenden Systemen, inerten Füllstoffen sowie ggf. Beschleunigern, Farbmitteln und weiteren Hilfsstoffen durch Formpressen hergestellt wird und ggf. mit einer Oberflächenschicht aus einem härtbaren Lackharz versehen wird, gekennzeichnet durch die Massnahmen:

a) Herstellen einer rieselfähigen Masse aus
2 bis 7, vorzugsweise 4 bis 6 Gew.-% einer härtbaren Kunststoffmischung,
0 bis 3 Gew.-% Ca-stearat, Zinkstearat oder Stearinsäure,
1 bis 5 Gew.-% Lösungsmittel, wie Wasser, Alkohol oder Mischungen hiervon,
96 bis 85, vorzugsweise 96 bis 87 Gew.-% Füllstoffe, wie Quarzsand, Kreide, Schwerspat, Korund, Schlacke bzw. Mischungen hiervon
durch homogenes Vermischen und Trocknen auf einen Restfeuchtigkeitsgehalt von 1 bis 3% bei Temperaturen von 50 bis 80°C;
b) Schütten der Masse in eine Form zu einem Grundkörper und Abpressen in der Form mit einem spezifischen Druck von 9,8 bis 49, vorzugsweise 19,6 bis 39,2 N/mm²
c) Entformen des Grundkörpers aus der Form;
d) ggf. Härten des entformten Grundkörpers bei Temperaturen bis vorzugsweise 150°C;
e) Auftragen einer Dessinierungsschicht auf zumindest einen Teil einer Oberfläche des Grundkörpers aus einem farbmittelhaltigen ggf. härtbaren Lack;
f) Trocknen und ggf. Härten der Dessinierungsschicht sowie ggf. des noch nicht gehärteten Grundkörpers bei Raumtemperatur bzw. erhöhten Temperaturen bis vorzugsweise 150°C;
g) ggf. Aufbringen einer Kunstglasur aus einer härtbaren Harzzusammensetzung und Aushärten der Kunstglasur.

2. Verfahren nach Anspruch 1, dadurch gekennzeichnet, dass Füllstoffe mit einer Korngrösse von 0 bis 0,5 mm eingesetzt werden.

3. Verfahren nach Anspruch 1 oder 2, dadurch gekennzeichnet, dass die härtbare Kunststoffmischung für den Grundkörper, abgesehen von ggf. eingesetzten Hilfsstoffen wie Benetzungsmittel, Stabilisatoren und Farbmittel, aus

96 bis 98 Gew.-% ungesättigten Polyesterharzen
3 bis 1 Gew.-% Härter
2 bis 1 Gew.-% Beschleuniger
besteht.

4. Verfahren nach Anspruch 1 oder 2, dadurch gekennzeichnet, dass die härtbare Kunststoffmischung für den Grundkörper aus

30 bis 80 Gew.-% Polyäther bzw. Polyol
70 bis 20 Gew.-% Isocyanat
besteht.

5. Verfahren nach Anspruch 1 oder 2, dadurch gekennzeichnet, dass die härtbare Kunststoffmischung für den Grundkörper, abgesehen von ggf. eingesetzten Hilfsstoffen, aus

90 bis 95 Gew.-% Polyacrylate bzw. Polymethacrylate,
10 bis 5 Gew.-% Härter, wie Peroxide
besteht.

6. Verfahren nach Anspruch 1 oder 2, dadurch gekennzeichnet, dass die härtbare Kunststoffmischung für den Grundkörper aus

50 bis 90 Gew.-% Epoxidharz
50 bis 10 Gew.-% Amine, Polyamidoamine bzw. Polyamine
besteht.

7. Verfahren nach Anspruch 1 oder 2, dadurch gekennzeichnet, dass die härtbare Kunststoffmischung für den Grundkörper aus

96 bis 100 Gew.-% Kondensationsharz wie Melaminharz, Phenolformaldehydharz, Harnstofformaldehydharz bzw. Mischungen hiervon und
0 bis 4 Gew.-% Härter
besteht.

8. Verfahren nach Anspruch 1 oder 7, dadurch gekennzeichnet, dass eine rieselfähige Masse aus

2 bis 4 Gew.-% einer härtbaren Kunststoffmischung auf Basis von Kondensationsharz,
1 bis 2 Gew.-% Ca-stearat, Zinkstearat oder Stearinsäure,
1 bis 5 Gew.-% Wasser, Alkohol oder Mischungen hiervon
96 bis 89 Gew.-% Füllstoff mit einer Korngrösse unter 0,5 mm

durch Mischen, Trocknen auf einen Restfeuchtigkeitsgehalt von 1 bis 3%, vorzugsweise 1,5 bis 2% bei Temperaturen etwa zwischen 50 bis 80°C und Sieben mit einer Maschenweite unter 0,8 mm hergestellt wird.

9. Verfahren nach einem der Ansprüche 1 bis 8, dadurch gekennzeichnet, dass zumindest ein Teil der Oberfläche des plattenförmigen Grundkörpers beim Verpressen in der Form strukturiert wird.

10. Verfahren nach einem der Ansprüche 1 bis 9, dadurch gekennzeichnet, dass für die Dessinierungsschicht lösungsmittelhaltige bzw. lösungsmittelfreie Lacke mit bis zu 100 Gew.-% Feststoffanteilen aus Bindemitteln, Farbmitteln, üblichen Hilfsstoffen nach bekannten Verfahren wie Spritzen, Drucken, Siebdrucken, Tropfen, Giessen, kombinierten Verfahren ein- bzw. mehrfach mit einem Nassauftragsgewicht zwischen 5 und 200 g/m² auf den Grundkörper aufgebracht werden, wobei für die Lacke sowohl physikalischtrocknende, chemischhärtende oder strahlenhärtbare Bindemittelsysteme verwendet werden.

11. Verfahren nach einem der Ansprüche 1 bis 10, dadurch gekennzeichnet, dass als Kunstglasur härtbare Harzzusammensetzungen auf Basis von Acrylaten, Methacrylaten, Polyurethanen, Polythiol/en-Systeme bzw. Organopolysiloxane oder Mischungen hiervon verwendet werden, die durch Walzen, Tauchen, Drucken, Giessen oder Spritzen mit einem Auftragsgewicht von 20 bis 150 g/m² aufgetragen werden und durch UV- oder ES-Strahlen chemisch oder durch Lufttrocknung härtbar sind.

12. Verfahren nach Anspruch 8, dadurch gekennzeichnet, dass eine rieselfähige Masse unter Verwendung von Melaminharzen, Harnstoff-Formaldehydharzen und/oder Phenolformaldehydharzen in eine Form geschüttet und zu einem Grundkörper einer Dicke von 2 bis 30 mm verpresst wird, danach der verpresste Grundkörper kalt entformt und dann ein farbmittelhaltiger härtbarer Lack auf eine Oberfläche des Grundkörpers aufgetragen wird, wobei der Lack sowohl in die Poren des Grundkörpers eindringt als auch in den Grundkörper migrieren kann, danach bei erhöhten Temperaturen vorzugsweise zwischen 60 und 130°C während einer Zeitdauer bis ca. 2 Stunden der Grundkörper mit Lackschicht gehärtet wird, dann eine ggf. härtbare transparente Harzzusammensetzung auf die Lackschicht des Grundkörpers aufgebracht und bei erhöhten Temperaturen getrocknet und gehärtet wird.

13. Verfahren nach einem der Ansprüche 1 bis 12, dadurch gekennzeichnet, dass unterschiedlich eingefärbte rieselfähige Massen nacheinander oder gleichzeitig mittels Schablone in eine Form geschüttet und zu einem Grundkörper verpresst werden.

**Revendications**

1. Procédé de fabrication de corps moulés dessinés du genre de la céramique, dans lequel on prépare un corps de base à partir d'une masse durcissable à base de matières synthétiques duroplastiques éventuellement avec des durcissants ou en combinaison avec des systèmes durcissants minéraux, des matières de charge inertes ainsi que des accélérateurs, des colorants et autres substances auxiliaires par pressage en moule, et dans lequel on le munit éventuellement d'une couche de surface en une résine de vernis durcissable, caractérisé par les mesures suivantes:

a) préparation d'une masse fluide à partir de
2 à 7, de préférence 4 à 6% en poids d'un mélange durcissable de matières plastiques,
0 à 3% en poids de stéarate de calcium, de stéarate de zinc ou d'acide stéarique,
1 à 5% en poids de solvant tel que de l'eau, de l'alcool ou leurs mélanges,
96 à 85, de préférence 96 à 87% en poids de matières de charge telles que du sable de quartz, de la craie, de la barytine, du corindon, de la scorie ou leurs mélanges,
par mélange homogène et séchage à une teneur en humidité résiduelle de 1 à 3% à des températures de 50 à 80°C,
b) versement de la masse dans un moule pour obtenir un corps de base et pressage dans le moule sous une pression spécifique de 9,8 à 49, de préférence de 19,6 à 39,2 N/mm²,

c) démoulage du corps de base à partir du moule,

d) durcissement éventuel du corps de base démoulé à des températures allant de préférence jusqu'à 150°C,

e) application d'une couche de dessin sur au moins une partie d'une surface du corps de base à partir d'un vernis renfermant des colorants et éventuellement durcissable,

f) séchage et éventuellement durcissement de la couche de dessin, de même qu'éventuellement du corps de base non encore durci, à la température ordinaire ou à des températures plus élevées allant de préférence jusqu'à 150°C,

g) application éventuelle d'une glaçure synthétique à partir d'une composition résineuse durcissable et durcissement complet de la glaçure synthétique.

2. Procédé selon la revendication 1, caractérisé en ce qu'on utilise des matières de charge ayant une granulométrie de 0 à 0,5 mm.

3. Procédé selon la revendication 1 ou 2, caractérisé en ce que le mélange de matières plastiques durcissable pour le corps de base, abstraction faite des auxiliaires, des mouillants, des stabilisants et des colorants éventuellement utilisés, consiste en

96 à 98% en poids de résines polyesters insaturées
3 à 1% en poids de durcissant
2 à 1% en poids d'accélérateur.

4. Procédé selon la revendication 1 ou 2, caractérisé en ce que le mélange de matières plastiques durcissable pour le corps de base se compose de:

30 à 80% en poids de polyéther ou polyol
70 à 20% en poids d'isocyanate.

5. Procédé selon la revendication 1 ou 2, caractérisé en ce que le mélange de matières plastiques durcissable pour le corps de base, indépendamment des substances auxiliaires éventuellement utilisées, consiste en

90 à 95% en poids de polyacrylates ou polyméthacrylates,
10 à 5% en poids de durcissant tel que des peroxydes.

6. Procédé selon la revendication 1 ou 2, caractérisé en ce que le mélange de matières plastiques durcissable pour le corps de base consiste en:

50 à 90% en poids de résine époxy
50 à 10% en poids d'amines, de polyamidoamines ou polyamines.

7. Procédé selon la revendication 1 ou 2, caractérisé en ce que le mélange de matières plastiques durcissable pour le corps de base consiste en:

96 à 100% en poids de résine de condensation telle qu'une résine de mélamine, une résine de phénol-formaldéhyde, une résine urée-formaldéhyde ou leurs mélanges et en
0 à 4% en poids de durcissant.

8. Procédé selon la revendication 1 ou 7, caractérisé en ce qu'on prépare une masse fluide à partir de

2 à 4% en poids d'un mélange de matières plastiques durcissable à base de résine de condensation,
1 à 2% en poids de stéarate de calcium, de stéarate de zinc ou d'acide stéarique,
1 à 5% en poids d'eau, d'alcool ou de leurs mélanges
96 à 89% en poids de matières de charge ayant une granulométrie inférieure à 0,5 mm,

par mélange, séchage à une teneur résiduelle en humidité de 1 à 3%, de préférence de 1,5 à 2%, à des températures entre environ 50 et 80°C, et par tamisage à une largeur de maille inférieure à 0,8 mm.

9. Procédé selon l'une des revendications 1 à 8, caractérisé en ce qu'au moins une partie de la surface du corps de base en forme de plaque est structurée au cours du pressage dans le moule.

10. Procédé selon l'une des revendications 1 à 9, caractérisé en ce que pour la couche de dessin on applique des vernis contenant des solvants ou exempts de solvants avec jusqu'à 100% en poids de fractions solides constituées de liants, de colorants, d'auxiliaires usuels, par des procédés connus comme la pulvérisation, l'impression, l'impression au tamis, le gouttage, la coulée, des procédés combinés, en une ou plusieurs fois, avec un poids d'application à l'état mouillé entre 5 et 200 g/m² sur le corps de base, en utilisant pour les vernis des systèmes de liants à séchage physique, à durcissement chimique ou durcissables par irradiation.

11. Procédé selon l'une des revendications 1 à 10, caractérisé en ce qu'on utilise comme glaçure synthétique des compositions résineuses durcissables à base d'acrylates, de méthacrylates, de polyuréthanes, de systèmes polythiol/ène ou des organopolysiloxanes, ou leurs mélanges, qui sont appliquées par cylindrage, trempage, impression, coulée ou pulvérisation en un poids d'application de 20 à 150 g/m² et en ce qu'elles sont durcissables par des rayonnements ultraviolets ou électroniques, chimiquement ou par séchage à l'air.

12. Procédé selon la revendication 8, caractérisé en ce qu'on verse une masse fluide avec utilisation de résines de mélamine, de résines urée-formaldéhyde et/ou de résines phénol-formaldéhyde dans un moule et on la comprime en un corps moulé ayant une épaisseur de 2 à 30 mm, on démoule par la suite à froid le corps de base pressé puis on applique un vernis durcissable contenant des colorants sur une surface du corps de base, le vernis pénétrant ainsi dans les pores du corps de base tout comme il peut émigrer aussi dans le corps de base, on durcit ensuite le corps de base avec la couche de vernis à des températures élevées, de préférence entre 60 et 130°C, pendant un laps de temps allant jusqu'à environ 2 heures, puis on applique une composition résineuse transparente éventuellement durcissable sur la couche de vernis du corps de base et l'on sèche et durcit à des températures élevées.

13. Procédé selon les revendications 1 à 12, caractérisé en ce qu'on verse des masses fluides différemment colorées successivement ou simultanément au moyen de patrons dans un moule et on les presse en un corps de base.

**Claims**

1. Process for the production of patterned ceramic-like shaped bodies wherein a matrix body formed of a hardenable material based on thermoplastic plastics optionally with hardeners or in combination with inorganic hardening systems, inert fillers as well as optionally accelerators, colourants and further auxiliary materials is produced by moulding and optionally is provided with a surface layer made of a hardenable lacquer resin, characterised by the features:

a) production of a trickleable material formed from 2 to 7, preferably 4 to 6% by weight of a hardenable plastics mixture,
0 to 3% by weight Ca-stearate, zinc stearate or stearic acid,
1 to 5% by weight solvent, such as water, alcohol or mixtures thereof,
96 to 85, preferably 96 to 87% by weight of fillers such as quartz sand, chalk, heavy spar, corundum, slag or mixtures thereof,
by homogeneous mixing and drying at temperatures of 50 to 80°C to a residual moisture content of 1 to 3%,
b) pouring the material into a mould for a matrix body and pressing in the mould with a specific pressure of 9.8 to 49, preferably 19.6 to 39.2 N/mm², 
c) removal of the matrix body from the mould,
d) optionally hardening the matrix body removed from the mould at temperatures up to preferably 150°C,
e) application on at least a part of a surface of the matrix body of a patterning layer made from a colourant-containing optionally hardenable lacquer,
f) drying and optionally hardening of the patterning layer as well as if necessary of the still not hardened matrix body at room temperature or elevated temperatures up to preferably 150°C,
g) optionally applying an artificial glaze made from a hardenable resin composition and hardening of the artificial glaze.

2. Process according to claim 1, characterised in that fillers with a particle size of 0 to 0.5 mm are employed.

3. Process according to claim 1 or 2, characterised in that the hardenable plastics mixture for the matrix body consists of, apart from optionally employed auxiliary materials such as moistening agents, stabilisers and colourants,

96 to 98% by weight of unsaturated "polyester resins"
3 to 1% by weight of hardener
2 to 1% by weight of accelerator.

4. Process according to claim 1 or 2, characterised in that the hardenable plastics mixture for the matrix body consists of

30 to 80% by weight of polyether or polyol
70 to 20% by weight of isocyanate.

5. Process according to claim 1 or 2, characterised in that the hardenable plastics mixture for the matrix body consists of, apart from optionally employed auxiliary materials,

90 to 95% by weight of polyacrylates or polymethacrylates
10 to 5% by weight of hardener, such as peroxide.

6. Process according to claim 1 or 2, characterised in that the hardenable plastics mixture for the matrix body consists of

50 to 90% by weight epoxide resin
50 to 10% by weight of amines, polyamidoamines or polyamines.

7. Process according to claim 1 or 2, characterised in that the hardenable plastics mixture for the matrix bodies consists of

96 to 100% by weight of condensation resin such as melamine resin, phenol-formaldehyde resin, ureaformaldehyde resin or mixtures thereof and
0 to 4% by weight of hardener.

8. Process according to claim 1 or 7, characterised in that a trickleable material made up from

2 to 4% by weight of a hardenable plastics mixture based on condensation resin,
1 to 2% by weight Ca stearate, zinc stearate or stearic acid,
1 to 5% by weight water, alcohol or mixtures thereof,
96 to 89% by weight filler with a particle size below 0.5 mm

is produced by mixing, drying to a residual moisture content of 1 to 3%, preferably 1.5 to 2%, at temperatures approximately between 50 to 80°C and sieving with a mesh width below 0.8 mm.

9. Process according to one of claims 1 to 8, characterised in that at least one part of the surface of the plate-shaped matrix body is structured on pressing in the mould.

10. Process according to one of claims 1 to 9, characterised in that solvent-containing or solvent-free lacquers for the patterning layer, with up to 100% by weight solids components made up of binders, colourants, conventional auxiliary substances, are applied by known processes such as spraying, printing, screen printing, drop application, casting, combined processes one or several times with a wet application weight between 5 and 200 g/m² to the matrix body with physical drying, chemical hardening or radiation hardenable binder systems being used for the lacquers.

11. Process according to one of claims 1 to 10, characterised in that there are used as artificial glaze hardenable resin compositions based on acrylates, methacrylates, polyurethanes, polythiol/ene systems or organopolysiloxanes or mixtures thereof which are applied by rolling, immersing, printing, casting or spraying with an application weight of 20 to 150 g/m² and are hardenable by UV or energy rich radiation, chemically or by air drying.

12. Process according to claim 8, characterised in that a trickleable material with use of melamine resins, urea-formaldehyde resins and/or phenol formaldehyde resins is poured into a mould and pressed to a matrix body of a thickness of 2 to 30 mm, after which the pressed matrix body is removed from the mould cold and then a colourant containing hardenable lacquer is applied to a surface of the matrix body, with the lacquer both penetrating the pores of the matrix body and also being able to migrate in the matrix body, after which the matrix body with lacquer layer is hardened at elevated temperatures, preferably between 60 and 130°C, during a period of up to about 2 hours, then an optionally hardenable transparent resin composition is applied to the lacquer layer of the matrix body and dried at elevated temperatures and hardened.

13. Process according to one of claims 1 to 12, characterised in that differently coloured trickleable materials are poured one after another or simultaneously through a stencil into a mould and are pressed to a matrix body.

Fig. 1

Fig. 2